Europäisches Patentamt

European Patent Office

Office européen des brevets

(11) Publication number: **0 028 938**
**B1**

# EUROPEAN PATENT SPECIFICATION

(45) Date of publication of patent specification: **17.04.85**

(51) Int. Cl.[4]: **B 01 J 29/10,** C 10 G 47/16

(21) Application number: **80304036.9**

(22) Date of filing: **12.11.80**

(54) Catalytic conversion of hydrocarbons.

(30) Priority: **13.11.79 US 93586**

(43) Date of publication of application:
**20.05.81 Bulletin 81/20**

(45) Publication of the grant of the patent:
**17.04.85 Bulletin 85/16**

(84) Designated Contracting States:
**DE FR GB IT NL**

(56) References cited:
**EP-A-0 003 818**
**EP-A-0 011 349**
**FR-A-2 172 291**
**FR-A-2 416 731**
**GB-A-1 237 022**
**GB-A-1 452 088**
**GB-A-2 014 970**
**US-A-3 130 007**
**US-A-3 536 605**

(73) Proprietor: **UNION CARBIDE CORPORATION**
**Old Ridgebury Road**
**Danbury Connecticut 06817 (US)**

(72) Inventor: **Bezman, Richard David**
**383 S. Lexington Avenue**
**White Plains, NY 10606 (US)**
Inventor: **Rabo, Jule Anthony**
**19, Windmill Road**
**Armonk, NY 10504 (US)**

(74) Representative: **Shipton, Gordon Owen et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 028 938

**Description**

The present invention relates in general to the catalytic conversion of hydrocarbons, and more particularly to a process for the catalytic hydrocracking of heavy hydrocarbon or petroleum feedstocks to midbarrel products using a catalyst comprising a hydrophobic derivative of zeolite Y. The process is efficient both from the standpoints of conversion rates and selectivity for the desired middle distillates.

Catalytic midbarrel hydrocracking is a petroleum refining process of rapidly increasing importance due to the similarly rapid increase in the demand for middle-distillate fuels. In general the process comprises converting heavy petroleum feedstocks boiling above 371.1°C (700°F) to lower-boiling products in the range of 148.9°C (300°F) to 371.1°C (700°F), e.g. fuel gases, gasoline, petrochemical naphthas, furnace oil and diesel and turbine fuels. The catalysts employed are of the dual functional type and comprise a hydrogenation-dehydrogenation component, such as a Group VIII noble metal or a combination of Group VIII and Group VIB metal, in combination with a solid acid support, such as silica-alumina or an aluminosilicate, which is the acidic cracking component.

Of the solid acid components, it is generally considered that zeolitic aluminosilicates are the most active in the sense that they convert the highest fraction of feedstock to products under reasonable operating conditions. Activity, however, is only one of three essential properties of a midbarrel hydrocracking catalyst—the other two being selectivity, i.e. the tendency of the catalyst to produce desirable products exclusively, and stability which is a measure of the useful operating life of the catalyst. In the case of crystalline zeolitic catalyst bases as a class, it has been found that their high activity does not compensate for their relatively poor selectivity, and accordingly few if any present commercial midbarrel hydrocracking catalysts utilize zeolites as the principal acid cracking component. Instead, this function is provided by amorphous compositions such as silica-aluminas, which exhibit quite good selectivity but notably lower activity. Processes utilizing these amorphous catalysts necessarily because of low stability, employ large amounts of catalyst, larger reactors and higher total pressures than are desirable from the standpoint of capital and manufacturing costs.

By means of the present invention a midbarrel hydrocracking process is provided which can utilize the high activity of crystalline zeolitic supports without sacrificing the selectivity of amorphous compositions and at the same time having excellent stability.

It has now been found that such a process is made possible by the use as the acid catalyst component of a particular derivative of zeolite Y which is extraordinarily hydrophobic, i.e. has a high adsorptive capacity for relatively non-polar organic molecules but a very low affinity for highly polar water molecules. The selectivity of this acid catalyst component is abnormally high for a crystalline material, whereas the activity and stability are not impaired in comparison with other known zeolite supports. Further, the relationship between the hydrogenation component and the acid support, which in general is quite complex and not fully understood, is highly compatible in the sense that interreactions between the two are either favorable or very slight. Also, the relationship between the two catalytic components is not appreciably altered by components of the feedstocks or the product.

The particular zeolite acid components of the catalyst of the present process are defined and the method for their preparation disclosed in detail in GB—A—2,014,970 said application being incorporated by reference herein in its entirety. In general, UHP-Y zeolites can be characterized to distinguish them from all other zeolite forms as being zeolite aluminosilicates having a $SiO_2/Al_2O_3$ molar ratio of from 4.5 to 35, preferably 4.5 to 9, the essential X-ray powder diffraction pattern of zeolite-Y, an ion-exchange capacity of not greater than 0.070, a unit cell dimension $a_o$, of from 24.20 to 24.45 Å, a surface area of at least 350 m²/g. (B-E-T), a sorptive capacity for water vapor at 25°C and at a $p/p_o$ value of 0.10 of less than 5.00 weight percent, and a Residual Butanol Test Value of not more than 0.40 weight percent. In the term "$p/p_o$" the symbol $p_o$ is the vapor pressure of water at any specified temperature and p is the actual water vapor pressure used during the determination of adsorption capacity. In other words $p/p_o$ is a measure of relative humidity.

GB—A—1,452,088 is concerned with a steam stabilized zeolite-Y composition and US—A—3,536,605 is concerned with a crystalline zeolite molecular sieve but neither of the specifications refers to the ion exchange capacity, the surface area (B-E-T), the $p/p_o$ value or the Residual Butanol Test Value of the steam stabilized zeolite aluminosilicate, derived from zeolite Y, of the present invention.

As used herein in this specification and the appended claims, the following terms are intended to have the meanings set forth immediately below:

Surface areas of all zeolitic compositions are determined by the well-known Brunauer-Emmett-Teller method (B-E-T) (S. Brunauer, P. Emmett and E. Teller, J. Am. Chem. Soc. *60*, 309 (1938)) using nitrogen as the adsorbate.

The essential X-ray powder diffraction pattern of zeolite Y is set forth in US—A—3,130,007, issued April 21, 1964 and is incorporated by reference herein in its entirety. It will be understood by those skilled in the art that the shrinkage of the unit cell resulting from the steaming process which produces UHP-Y will cause some slight shift in the d-spacings. In all events, the X-ray diffraction pattern of the UHP-Y compositions exhibit at least the d-spacings corresponding to the Miller Indices set forth in Table A *infra*, and can contain all the other d-spacings permissible to the face-centered cubic system with a unit cell edge of 24.20 to 24.45 Å. The value of the d-spacings in Å can be readily calculated by substitution in the formula:

2

0 028 938

$$d_{hkl} = \frac{a_o}{\sqrt{h^2 + k^2 + l^2}}$$

The X-ray pattern of the UHP-Y zeolites is obtained by standard X-ray powder techniques. The radiation source is a high intensity, copper target X-ray tube operated at 50 Kv and 40 ma. The diffraction pattern from the copper K radiation and graphite monochromator is suitably recorded by an X-ray spectrometer scintillation counter, pulse height analyzer and strip chart recorder. Flat compressed powder samples are scanned at 1° per minute, using a 2-second time constant. Interplanar spacings (d) are obtained from Bragg Angle (2 theta) positions of peaks after subtracting background. The crystal symmetry is cubic.

TABLE A

| Miller indices hkl | Intensity $I/I_o$ |
|---|---|
| 111 | very strong |
| 220 | medium |
| 311 | medium |
| 331 | strong |
| 333; 511 | medium |
| 440 | medium |
| 533 | strong |
| 642 | strong |
| 751; 555 | strong |

The anhydrous state of any zeolite composition for purposes of determining constituent proportions in terms of weight percent is the condition of the zeolite after being fired in air at 1000°C for one hour.

The term ion exchange capacity or IEC is intended to denote the number of active cation sites in the zeolite which exhibit a strong affinity for water molecules and hence appreciably affect the overall capacity of the zeolite to adsorb water vapor. These include all sites which are either occupied by any cation, but in any event are capable of becoming associated with sodium cations when the zeolite is contacted at 25°C three times for a period of one hour each with a fresh aqueous ion exchange solution containing as the solute 0.2 mole of NaCl per liter of solution, in proportions such that 100 ml of solution is used for each gram of zeolite. After this contact of the zeolite with the ion-exchange solution, routine chemical gravimetric analysis is performed to determine the relative molar proportions of $Al_2O_3$, $SiO_2$ and $Na_2O$. The data are then substituted in the formula:

$$IEC = k[Na_2O/SiO_2]$$

wherein "k" is the $SiO_2/Al_2O_3$ molar ratio of the zeolite immediately prior to contact with the NaCl ion-exchange solution.

The Residual Butanol Test is a measure of the adsorptive selectivity of zeolite adsorbents for relatively non-polar organic molecules under conditions in which there is active competition between water and less polar molecules for adsorption on the zeolite. The test procedure consists of activating the zeolite sample by heating in air at a temperature of 300°C for 16 hours. Thereafter, the activated zeolite crystals are slurried with a solution of 1-butanol in water in proportions such that the slurry consists of 1.0 part by weight 1-butanol, 100 parts by weight water and 10 parts by weight of the as-activated zeolite. The slurry is mildly agitated for 16 hours while the temperature is maintained at 25°C. The supernatant liquid is then analyzed for its residual 1-butanol content in terms of weight percent.

For the determination of the sorptive capacity of the UHP-Y compositions for any particular adsorbate, for example, water, the test zeolite sample is activated by preheating at 425°C for 16 hours at a pressure of 5 micrometers of mercury in a conventional McBain apparatus. Thereafter, the temperature of the sample is adjusted to the desired value and contacted with the vapor of the test adsorbate at the desired pressure.

In general, UHP-Y zeolites can be prepared from a type-Y zeolite starting material having a $SiO_2/Al_2O_3$ molar ratio of from 4.5 to 6.0, not greater than 3.3 equivalent percent metal cations and having an

3

**0 028 938**

adsorptive capacity for water vapor at 25°C and a $p/p_o$ value of 0.10 of at least 6.0 weight percent and a surface area of at least 350 $m^2/g$. The conversion to a UHP-Y type zeolite is accomplished by calcining the starting zeolite in an environment comprising from 20.26 to 1,1013.2 k Pa (0.2 to 10 atmospheres) of steam at a temperature of from 725°C to 870°C for a period of time sufficient to reduce the adsorption capacity for water vapor at 25°C and at a $p/p_o$ value of 0.10 of less than 5.00 weight percent. It is advantageous to carry out the calcination in an environment of steam at about 101.32 k Pa 1 atmosphere pressure and at a temperature of about 800°C for a period of from 0.5 to 4 hours.

The UHP-Y zeolite component should comprise at least 2 weight per cent (anhydrous) of the overall catalyst composition, and preferably at least 5 weight per cent. The UHP-Y constituent can be employed in combination with any of the solid acid catalysts components which are known to be useful in hydrocracking catalysts, but such combinations tend to be less effective than the use of UHP-Y as the sole acid support or in combination with relatively inert refractory diluents e.g. alumina, silica, magnesia, zirconia, beryllia, titania or mixtures thereof.

The hydrogenation component of the present catalyst composition may be, for example, a Group VIII noble metal, particularly platinum or palladium, but when the feedstocks being hydrocracked contain more than 1.0 weight per cent sulfur the hydrogenation component is preferably a combination of a Group VIII non-noble metal and a Group VIB metal. These latter metals may be, for example, molybdenum, tungsten, nickel or cobalt. The hydrogenation metal components are usually present in the final catalyst composition as oxides, or more preferably, as sulfides when such compounds are readily formed from the particular metal involved. Preferred overall catalyst compositions contain in excess of 5 weight percent, preferably 5 to 40 weight percent molybdenum and/or tungsten, and at least 0.5, and generally 1 to 15 weight percent of nickel and/or cobalt determined as the corresponding oxides. The sulfide form of these metals is most preferred due to higher activity, selectivity and activity retention.

The hydrogenation components can be incorporated into the overall catalyst composition by any one of numerous procedures. They can be added either to the zeolite or the metal oxide or a combination of both. In the alternative, the Group VIII components can be added to the zeolite by co-mulling, impregnation, or ion exchange and the Group VI components, i.e., molybdenum and tungsten, can be combined with the refractory oxide by impregnation, co-mulling or co-precipitation.

Although these components can be combined with the catalyst support as the sulfides, that is generally not the case. They are usually added as a metal salt which can be thermally converted to the corresponding oxide in an oxidizing atmosphere or reduced to the metal with hydrogen or other reducing agent. The composition can then be sulfided by reaction with a sulfur donor such as carbon bisulfide, hydrogen sulfide, hydrocarbon thiols, elemental sulfur, and the like.

When refractory metal oxides such as alumina are to be present in the catalyst, any of the numerous well known techniques can be used to combine same with the UHP-Y component. For example the zeolite can be mulled with a hydrogel of the oxide followed by partial drying if required and extruding, pelletizing or the like to form particles of the desired shape. Alternatively, the refractory oxide can be precipitated in the presence of the zeolite. This is accomplished by increasing the pH of a solution of a refractory oxide precursor e.g. sodium aluminate or sodium silicate. As described above, the combination can then be partially dried as desired, tabletted, pelleted, extruded, or formed by other means and than calcined, e.g., at a temperature above 315.6°C (600°F) usually above 426.7°C (800°F).

Hydrogenation components can be incorporated at any one of a number of stages in the catalyst preparation. For example, metal compounds such as the sulfides, oxides or water-soluble salts such as ammonium heptamolybdate, ammonium tungstate, nickel nitrate, cobalt sulfate and the like can be added by co-mulling, impregnation or precipitation to either the zeolite or the refractory oxide or the combination of both before the composite is finally calcined. In the alternative these components can be added to the finished particle by impregnation with an aqueous, alcoholic or hydrocarbon solution of soluble compounds or precursors. Impregnation is the preferred technique.

The hydrocarbon feedstocks suitably treated in the present process boil primarily above 371.1°C (700°F). At least 90 percent of the feed will generally boil between 371.1°C (700°F) and 648.89°C (1,200°F). Feedstocks having these characteristics are, for example, gas oils, vacuum gas oils, deasphalted residua, catalytic cracking cycle stocks, shale oil, tar sand oil, coal tars or liquids. The feed to the hydrocracking zone generally contains at least 5 ppm and usually between 10 ppm and 0.1 weight percent nitrogen as organonitrogen compounds. It may also contain substantial amounts of mono- or polynuclear aromatic compounds corresponding to at least 5 and generally 5 to 40 volume percent aromatics.

Reaction temperature exceed 260°C (500°F) and are usually above 315.6°C (600°F), preferably between 315.6°C (600°F) and 482.2°C (900°F). Hydrogen addition rates should be at least 94,99 (400 s.c.f./barrel), and are usually between 474.8 and 3562.2 standard cubic meters per cubic meter (2,000 and 15,000 standard cubic feet per barrel). Reaction pressure exceed 1,379 k Pa gauge (200 psig), and are usually within the range of 3,447.5 k Pa gauge (500 psig) to 20,685 k Pa gauge (3000 psig). Contact times usually correspond to liquid hourly space velocities in fixed bed catalytic systems less than 15, preferably between 0.2 and 10.

Overall conversion rate is primarily controlled by reaction temperature and liquid hourly space velocity. However, selectivity to mid-barrel distillate products is generally inversely proportional to reaction temperature. It is not as severely affected by reduced space velocities at otherwise constant conversion. Conversely, selectivity is usually improved at higher pressures and hydrogen addition rates. Thus the most

4

# 0 028 938

desirable conditions for the conversion of a specific feed to a predetermined product can be best obtained by converting the feed at several different temperatures, pressure, space velocities and hydrogen addition rates, correlating the effect of each of these variables and selecting the best compromise of overall conversion and selectivity.

The method for manufacture of UHP-Y zeolite and the overall catalyst composition, the practice of the present process using such catalyst composition and a comparison of results obtained in midbarrel hydrocracking versus a prior known and similar catalyst are illustrated in the following Examples. In the reported results the catalyst activity is defined as the average reactor temperature needed to achieve the desired extent of conversion of fresh feed to products boiling below 371.1°C (700°F), while selectivity is defined as the volume fraction of product boiling below 371.1°C (700°F) that boils within the range 148.9—371.1°C (300—700°F). In all cases, boiling point distributions of products were estimated by a gas chromatographic procedure based on ASTM standard D-2887-70T.

Example 1 (Preparation of UHP-Y)

A sample of air-dried ammonium exchanged type Y zeolite having a composition exclusive of water of hydration: 0.156 $Na_2O$:0,849 $(NH_4)_2O$:$Al_2O_3$:5.13 $SiO_2$ was tabletted into 1.27 cm (1/2 inch) diameter slugs and charged to a Vycor tube 60.96 cm (24 inches) in length and 6.35 cm (2.5 inches) in diameter and provided with an external heating means. Over a period 0.25 hours, the temperature of the charged was raised to 600°C and thereafter maintained at this temperature for one hour. During this 1.25 hour period, a pure steam atmosphere at 101.36 K Pa absolute (14.7 psia) generated from demineralized water was passed upward through the charge in the tube at a rate of $12.6 \times 10^{-6}$ to $63 \times 10^{-6}$ Kg s$^{-1}$ (0.1 to 0.5 pounds per hour). Ammonia gas generated during the heating by deamination of the zeolite was passed from the system continually. At the termination of the heating period the steam flow through the tube was stopped and the temperature of the charge in the tube was lowered to ambient room temperature over a period of 5 minutes. Analysis of this steamed product indicated the characteristic X-ray powder diffraction pattern of zeolite-Y, a surface area of 760 m$^2$/g and an $a_o$ value of 24.52 Å. Thereafter the sodium cation content of the first steamed material was reduced to 2.0 equivalent percent (0.27 weight percent as $Na_2O$) by ion exchange using an aqueous solution of $NH_4Cl$ (30 wt.-%) at reflux. This product was thereafter converted to UHP-Y using the same apparatus and conditions except that the pure steam calcination atmosphere was passed over the sample in the reactor at 101.36 k Pa absolute (14.7 psia) at a temperature of 800°C for 4 hours. The product was then cooled to ambient room temperature in a desiccator and portions thereof analyzed for ion-exchange capacity, B-E-T nitrogen surface area, adsorption capacity for water, nitrogen and n-hexane and Residual Butanol Test value. The data from the analyses are set forth below:

| Adsorbate | Adsorptive capacity: | | Loading, wt.-% |
|---|---|---|---|
| | Pressure mm Hg. | Temp., °C | |
| Nitrogen | 35 | −196 | 15.8 |
| Nitrogen | 66 | −196 | 16.5 |
| Nitrogen | 137 | −196 | 17.3 |
| Nitrogen | 528 | −196 | 19.2 |
| Water | 2.0 | 25 | 3.1 |
| Water | 4.6 | 25 | 4.6 |
| Water | 20.0 | 25 | 15.0 |
| n-Hexane | 5.0 | 25 | 10.8 |
| n-Hexane | 20.0 | 25 | 14.2 |
| n-Hexane | 50.0 | 25 | 16.0 |
| n-Hexane | 75.0 | 25 | 19.8 |

Ion-exchange capacity=0.04
Surface area=530 m$^2$/g
Residual butanol test value=0.23 weight percent.

5

Example 2

A midbarrel hydrocracking catalyst composition was prepared as follows: 375 grams (anhydrous weight) of UHP-Y having a unit cell dimension of 24.30 Å, a surface of 540 $m^2$/g, a water adsorption capacity of 4.8 weight percent at 25°C and 4.6 Torr (613.18 Pa) water vapor pressure, and a Residual Butanol Test Value of 0.30 weight percent, was ammonium cation exchanged by meanms of a 1-hour reflux with 3.8 liters of 10% $NH_4Cl$ solution (aqueous), after which the zeolite was washed chloride-free. The chemical composition was:

$$Na_2O—0.09 \text{ wt.-\% (anhyd.)}$$

$$(NH_4)_2O—0.5 \text{ wt.-\% (anhyd.)}$$

$$SiO_2—77.2 \text{ wt.-\% (anhyd.)}$$

$$Al_2O_3—21.5 \text{ wt.-\% (anhyd.)}$$

The ammonium-exchanged UHP-Y thoroughly admixed with 238 grams of $NiCO_3$, 521 grams of ammonium heptamolybdate tetrahydrate and 1050 grams (anhydrous) of medium density substrate alumina. A 500 gram portion of alumina prepared by the hydrolysis of an aluminum alcoholate was peptized with a solution of 70 ml. conc. $HNO_3$ in 2000 ml. $H_2O$, and then blended into the aforesaid mixture of other catalyst components. The resulting blend was extruded through a 1.59 mm (1/16") circular die, dried overnight at 110°C, heated at 220°C for 2 hours and then further heated at 500°C for 2 hours in a forced air oven. The composition of the final calcined catalyst product was 15 weight-% UHP-Y zeolite, 6 weight-% NiO, 17 weight-% $MoO_3$ and 62 weight-% $Al_2O_3$.

Example 3

The catalyst composition prepared in Example 2 supra was tested for hydrocracking capabilities using two different feedstocks having the following properties:

| Feedstock | Kuwait vacuum gas oil | Arabian vacuum gas oil |
|---|---|---|
| Specific gravity | 23.6° API | 22.4° API |
| Sulfur | 2.74 wt. % | 2.40 wt. % |
| Nitrogen (total) | 0.075 wt. % | 0.073 wt. % |
| IPB (ASTM D-1160) | 342.8°C (649°F) | 366.1°C (691°F) |
| EP (ASTM D-1160) | 538.9°C (1002°F) | 567.2°C (1053°F) |

The test apparatus was a fixed bed bench-scale reactor containing 150 ml of catalyst diluted with 150 ml quartz chips (−12/+16 mesh). In the reactor the catalyst charge was activated by purging with a 10% $H_2S$/90% $H_2$ gas stream at atmospheric pressure while the temperature was slowly raised from ambient to 371.1°C (700°F) to effect sulfiding of the hydrogenation component. The hydrocracking conditions were:

| | |
|---|---|
| Reactor configuration | Downflow |
| Pressure | 12.41 M Pa gauge (1800 psig) (Kuwait feedstock) |
| | 13.79 M Pa gauge (2000 psig) (Arabian feedstock) |
| $H_2$ flow rate | 2374 standard cubic meters/cubic meter (10000 SCF/barrel) |
| LHSV | 1.0 $hr^{-1}$ (based on catalyst). |

In the test involving the Kuwait feedstock the catalyst activity was 399.4°C (751°F) to achieve a 70 volume percent conversion and the selectivity was 87 volume percent. With the Arabian feedstock the corresponding values were 403.3°C (758°F) to achieve 60 vol.% conversion and 80 volume percent selectivity.

6

Example 4

(a) A UHP-Y zeolite sample was prepared by steaming an ammonium exchanged precursor substantially the same as described in Example 1 supra in a rotary kiln at a shell temperature of 860°C and a total residence time of 180 minutes. The steaming environment over the zeolite was essentially pure steam at one atmosphere. The product zeolite had a unit cell dimension of 24.27 Å, a surface area of 579 m²/g, an adsorptive capacity for water at 25°C and 4.6 Torr (613.18 Pa) water vapor pressure of 3.7 wt.-% and a Residual Butanol Test Value of 0.4 wt.-%. The ion exchange capacity was below 0.05. The sodium content in terms of weight percent $Na_2O$ was below 0.25 wt.-%. The zeolite product was incorporated into a mid-barrel hydrocracking catalyst composition using the same procedure as set forth in Example 2 above, and tested for hydrocracking activity and selectivity using the same feedstock and test procedure as set forth in Example 3. With the Arabian feedstock, the catalyst activity was 406.7°C (764°F) to achieve a 60 vol.-% conversion and the selectivity was 86 volume percent.

(b) Using the same precursor zeolite and the same rotary kiln apparatus as in part (a) of this Example, a zeolite composition was prepared by the same procedure except that the residence time in the kiln was 90 minutes instead of 180 minutes. This product zeolite has physical properties very similar to those of UHP-Y but failed to exhibit the very high degree of hydrophobicity required to qualify as UHP-Y. The water adsorption capacity of this composition was 8.5 weight percent at 25°C and 613.18 Pa (4.6 Torr) water vapor pressure. This zeolite was substituted for the UHP-Y zeolite component of the catalyst composition in part (a) of this Example and tested for hydrocracking activity and selectivity using the same procedure with the Kuwait feedstock. It was found that although the activity was essentially the same as the catlyst of part (a), i.e. 397.2°C (747°F) to achieve a 70 volume percent conversion, the selectivity decreased drastically to 74 volume percent.

(c) A commercial hydrocracking catalyst was tested for mid-barrel hydrocracking in which the cracking component is an ammonium exchanged zeolite Y having a $Na_2O$ content of 2.5 weight-% and a $SiO_2/Al_2O_3$ molar ratio of 5 which had been steamed at 600°C for about 60 minutes and then ammonium exchanged to lower the $Na_2O$ content to about 0.2 weight-%. The water adsorption capacity of this zeolite at 25°C and a water vapor pressure of 613.18 Pa (4.6 Torr) was 27 wt.-%. The overall catalyst had the composition of:

Zeolite—14 wt.-%

NiO—6 wt.-%

$P_2O_5$—6 wt.-%

$MoO_3$—17 wt.-%

$Al_2O_3$—57 wt.-%

Using the Kuwait feedstock, the activity of the catalyst was 396.1°C (745°F) to achieve a 70% conversion and a selectivity of 65 wt.-%.

Example 5

A number of catalyst compositions of the present invention were prepared according to the general procedure of Example 2 using various proportions of zeolite, diluent and hydrogenation components. The $P_2O_5$ in certain of the compositions results from the addition of phosphoric acid into the composition during preparation to stabilize the solutions containing ammonium paramolybdate, the precursor of $MoO_3$. Nickel is added to the compositions as nickel nitrate and tungsten as ammonium paratungstate. The various catalyst compositions had the following proportions of constituents:

| (a) UHP-Y | —7.5 wt.-% |
| Acid-washed bentonite clay | —14.0 wt.-% |
| NiO | —6.0 wt.-% |
| $MoO_3$ | —17.0 wt.-% |
| $Al_2O_3$ | —Balance |
| (b) UHP-Y | —7 wt.-% |
| NiO | —6 wt.-% |
| $P_2O_5$ | —6 wt.-% |

7

**0 028 938**

|  |  |
|---|---|
| $MoO_3$ | —17 wt.-% |
| $Al_2O_3$ | —Balance |
| (c) UHP-Y | —4 wt.-% |
| NiO | —6 wt.-% |
| $P_2O_5$ | —6 wt.-% |
| $MoO_3$ | —18 wt.-% |
| $Al_2O_3$ | —Balance |
| (d) UHP-Y | —8 wt.-% |
| NiO | —6 wt.-% |
| $MoO_3$ | —17 wt.-% |
| $Al_2O_3$ | —Balance |

The foregoing catalysts were all tested for catalytic activity and selectivity in mid-barrel hydrocracking using the procedure and apparatus described hereinbefore in Example 3 and using a feedstock having the following properties:

|  |  |
|---|---|
| Specific gravity | —22.4 API |
| Sulfur | —2.40 wt.-% |
| Nitrogen (total) | —0.07 wt.-% |
| IPB (ASTM D-1160) | —366°C (691°F) |
| EP (ASTM D-1160) | —567°C (1053°F) |

The results are set forth in Table B below along with a summary of the results obtained in testing the composition of other Examples.

TABLE B

| Catalyst composition | Activity temperature °C (°F) | Selectivity vol.-% diesel |
|---|---|---|
| Example 2* | 403.3 (758) | 80 |
| Example 2* | 399.4 (751)** | 87** |
| Example 4(a) | 406.7 (764) | 86 |
| Example 4(b) | 397.2 (747)** | 74 |
| Example 4(c) | 396.1 (745)** | 65** |
| Example 5(a) | 407.2 (765) | 86 |
| Example 5(b) | 405 (761) | 87 |
| Example 5(c) | 416.7 (782) | 89 |
| Example 5(d) | 415 (779) | 88 |

\* The ammonium-exchanged form of UHP-Y.
\*\* The Kuwait VGO feedstock of Example 3.

8

# 0 028 938

## Claims

1. A process for selectively converting hydrocarbons boiling above 371°C (700°F) to midbarrel fuel products boiling at from 149°C (300°F) to 371°C (700°F) by reacting the hydrocarbons with hydrogen under hydrocracking conditions in the presence of a catalyst composition comprising a hydrogenation component and a crystalline aluminosilicate cracking component, characterised in that the aluminosilicate cracking component is a steam stabilized zeolitic aluminosilicate derived from zeolite-Y, by calcining the zeolite-Y under conditions to achieve an adsorption capacity for water vapour at 25°C and at a $p/p_o$ value of 0.10 of less than 5.00 weight percent, the zeolitic aluminosilicate having a $SiO_2/Al_2O_3$ molar ratio of from 4.5 to 35, the essential X-ray powder diffraction pattern of zeolite-Y, an ion exchange capacity of not greater than 0.070, a unit cell dimension $a_o$ of from 24.20 to 24.45 Å, a surface area of at least 350 $m^2/g$ (B-E-T), and a Residual Butanol Test Value of not more than 0.40 weight percent.

2. A process according to claim 1 characterised in that zeolite-Y is calcined in an environment comprising from 20.26 to 1013.2 kPa (0.2 to 10 atmospheres) of steam at a temperature from 725°C to 870°C for a period of time sufficient to reduce the adsorption capacity for water vapour at 25°C and at a $p/p_o$ value of 0.10 to less than 5.00 weight per cent.

3. A process according to claim 1 or 2, characterised in that the $SiO_2/Al_2O_3$ molar ratio of the zeolitic aluminosilicate is from 4.5 to 9.

4. A process according to claim 1, 2 or 3 characterised in that the zeolitic aluminosilicate comprises at least 2 weight per cent (anhydrous) of the overall catalyst composition.

5. A process according to claim 4 characterised in that the zeolitic aluminosilicate comprises at least 5 weight per cent (anhydrous) of the overall catalyst composition.

6. A process according to any of claims 1 to 5 characterised in that the hydrogenation component is a group VIII noble metal.

7. A process according to any of claims 1 to 5, characterised in that the hydrocarbons to be converted contain more than 1.0 weight per cent sulfur and the hydrogenation component is a combination of a group VIII noble metal and a group VIB metal.

8. A process according to claim 7, characterised in that the catalyst composition contains in excess of 5 weight per cent molybdenum and/or tungsten and at least about 0.5 weight per cent of nickel and/or cobalt determined as the corresponding oxides.

9. A process according to any of claims 6 to 8, characterised in that the hydrogenation metal component is in the form of sulfide.

10. A process according to any of claims 1 to 9, characterised in that the reaction temperature is above 260°C (500°F).

11. A process according to any of claims 1 to 10, characterised in that the hydrogen addition rate is at least 94.99 standard cubic metres per cubic metre (400 standard cubic feet per barrel).

12. A process according to any of claims 1 to 10, characterised in that the reactor pressure exceeds 1,379 kPa gauge (200 psig).

13. A process according to any of claims 1 to 11 characterised in that the contact time corresponds to a liquid hourly space velocity in a fixed bed catalytic system of less than 15.

## Patentansprüche

1. Verfahren zur selektiven Umwandlung von Kohlenwasserstoffen mit einem Siedepunkt oberhalb von 371°C (700°F) zu Produkten mit einem Siedebereich zwischen 149°C und 371°C (300°F bis 700°F, "midbarrel-Produkte") durch Umsetzung der Kohlenwasserstoffe mit Wasserstoff unter Hydrocrackbedingungen in Gegenwart einer Katalysatorzusammensetzung, die eine Hydrierkomponente und eine kristalline Alumosilikat - Crackkomponente enthält, dadurch gekennzeichnet, daß die Alumosilikat-Crackkomponente ein dampfstabilisiertes zeolithisches Alumosilikat ist, das sich vom Zeolith Y ableitet durch Calcinierung des Zeolith Y unter Bedingungen für eine Adsorptionskapazität für Wasserdampf von unter 5,00 Gew.% bei 25°C und einem $p/p_o$-Wert von 0,10, wobei das zeolithische Alumosilikat ein molares $SiO_2/Al_2O_3$-Verhältnis von 4,5 bis 35, das wesentliche Röntgenpulverdiffraktogramm von Zeolith Y, eine Ionenaustauschkapazität von weniger als 0,070, eine Einheitszellgröße $a_o$ von zwischen $24,2 \times 10^{-4}$ μm und $24,45 \times 10^{-4}$ μm, eine Oberfläche von mindestens 350 $m^2/g$ (B-E-T), und einen Restbutanol-Testwert von nicht mehr als 0,40 Gew.% aufweist.

2. Verfahren nach Anspruch 1, dadurch gekennzeichnet, daß Zeolith Y in einer Umgebung calciniert wird, in der zwischen 20,26 und 1013,2 kPa (0,2 bis 10 bar) Wasserdampfdruck und eine Temperatur zwischen 725°C und 870°C während einer Zeit herrschen, die ausreichend ist, die Adsorptionskapazität für Wasserdampf auf weniger als 5,00 Gew.% bei 25°C und einem $p/p_o$ Wert von 0,10 zu reduzieren.

3. Verfahren nach Anspruch 1 oder 2, dadurch gekennzeichnet, daß das molare $SiO_2/Al_2O_3$-Verhältnis des zeolithischen Alumosilikats zwischen 4,5 und 9 liegt.

4. Verfahren nach Anspruch 1, 2 oder 3, dadurch gekennzeichnet, daß das zeolithische Alumosilikat mindestens 2 Gew.% (wasserfrei) der gesamten Katalysatorzusammensetzung ausmacht.

5. Verfahren nach Anspruch 4, dadurch gekennzeichnet, daß das zeolithische Alumosilikat mindestens 5 Gew.% (wasserfrei) der gesamten Katalysatorzusammensetzung ausmacht.

9

**0 028 938**

6. Verfahren nach einem der Ansprüche 1 bis 5, dadurch gekennzeichnet, daß die Hydrierkomponente ein Edelmetall der Gruppe VIII ist.

7. Verfahren nach einem der Ansprüche 1 bis 5, dadurch gekennzeichnet, daß die umzuwandelnden Kohlenwasserstoffe mehr als 1,0 Gew.% Schwefel enthalten und die Hydrierkomponente eine Kombination eines Edelmetalls der Gruppe VIII und eines Metalls der Gruppe VIB ist.

8. Verfahren nach Anspruch 7, dadurch gekennzeichnet, daß die Katalysatorzusammensetzung über 5 Gew.% Molybdän und/oder Wolfram und wenigstens etwa 0,5 Gew.% Nickel und/oder Kobalt, bestimmt als entsprechende Oxide, enthält.

9. Verfahren nach einem der Ansprüche 6 bis 8, dadurch gekennzeichnet, daß die Hydriermetallkomponente in Form des Sulfids vorliegt.

10. Verfahren nach einem der Ansprüche 1 bis 9, dadurch gekennzeichnet, daß die Reaktionstemperatur oberhalb von 260°C (500°F) liegt.

11. Verfahren nach einem der Ansprüche 1 bis 10, dadurch gekennzeichnet, daß Menge des zugegebenen Wasserstoffs mindestens 94,99 Standard-$m^3$ pro $m^3$ Kohlenwasserstoffe beträgt (400 scf/barrel).

12. Verfahren nach einem der Ansprüche 1 bis 10, dadurch gekennzeichnet, daß der Reaktordruck über 1379 kPa Überdruck beträgt (200 psig).

13. Verfahren nach einem der Ansprüche 1 bis 11, dadurch gekennzeichnet, daß die Kontaktzeit einer Raumgeschwindigkeit (LHSV) in einem Festbett-Katalysatorsystem von weniger als 15 entspricht.

**Revendications**

1. Procédé de transformation sélective d'hydrocarbures bouillant au-dessus de 371° (700°F) en produits combustibles de distillation moyenne bouillant de 149°C (300°F) à 371°C (700°F) par réaction des hydrocarbures avec de l'hydrogène dans des conditions d'hydrocraquage en présence d'une composition de catalyseur comprenant un composant d'hydrogénation et un composant de craquage qui est un aluminosilicate cristallin, caractérisé en ce que l'aluminosilicate représentant le composant de craquage est un aluminosilicate zéolitique stabilisé à la vapeur, obtenu à partir de zéolite Y par calcination de cette dernière dans des conditions permettant d'obtenir une capacité d'adsorption de la vapeur d'eau à 25°C et à une valeur $p/p_o$ de 0,10, de moins de 5,00% en poids, l'aluminosilicate zéolitique ayant un rapport molaire $SiO_2/Al_2O_3$ de 4,5 à 35, le diagramme essentiel de diffraction des rayons X sous forme de poudre de la zéolite Y, une capacité d'échange ionique n'excédant pas 0,070, une dimension de maille $a_o$ de 24,20 à 24,45 Å, une surface spécifique d'au moins 350 $m^2/g$ (B-E-T) et une valeur dans l'analyse du butanol résiduel n'excédant pas 0,40% en poids.

2. Procédé suivant la revendication 1, caractérisé en ce que la zéolite Y est calcinée dans un milieu comprenant 20,26 à 1013,2 kPa (0,2 à 10 atmosphères) de vapeur d'eau à une température de 725 à 870°C pendant une période suffisante pour réduire la capacité d'adsorption de la vapeur d'eau à 25°C et à une valeur $p/p_o$ de 0,10, à moins de 5,00% en poids.

3. Procédé suivant la revendication 1 ou 2, caractérisé en ce que le rapport molaire $SiO_2/Al_2O_3$ de l'aluminosilicate zéolitique va de 4,5 à 9.

4. Procédé suivant la revendication 1, 2 ou 3, caractérisé en ce que l'aluminosilicate zéolitique constitue au moins 2% en poids (anhydre) de la composition totale du catalyseur.

5. Procédé suivant la revendication 4, caractérisé en ce que l'aluminosilicate zéolitique constitue au moins 5% en poids (anhydre) de la composition totale du catalyseur.

6. Procédé suivant l'une quelconque des revendications 1 à 5, caractérisé en ce que le composant d'hydrogénation est un métal noble du groupe VIII.

7. Procédé suivant l'une quelconque des revendications 1 à 5, caractérisé en ce que les hydrocarbures devant être convertis contiennent plus de 1,0% en poids de soufre et le composant d'hydrogénation est l'association d'un métal noble du groupe VIII et d'un métal du groupe VIB.

8. Procédé suivant la revendication 7, caractérisé en ce que la composition de catalyseur contient plus de 5% en poids de molybdène et/ou de tungstène et au moins environ 0,5% en poids de nickel et/ou de cobalt, déterminé sous la forme des oxydes correspondants.

9. Procédé suivant l'une quelconque des revendications 6 à 8, caractérisé en ce que le composant métallique d'hydrogénation est sous la forme de sulfure.

10. Procédé suivant l'une quelconque des revendications 1 à 9, caractérisé en ce que la température de réaction est supérieure à 260°C (500°F).

11. Procédé suivant l'une quelconque des revendications 1 à 10, caractérisé en ce que la vitesse d'addition d'hydrogène est d'au moins 94,99 mètres cubes normaux par mètre cube (400 $ft^3$ normaux par baril).

12. Procédé suivant l'une quelconque des revendications 1 à 10, caractérisé en ce que la pression manométrique dans le réacteur dépasse 1379 kPa (200 $lb/in^2$).

13. Procédé suivant l'une quelconque des revendications 1 à 11, caractérisé en ce que la durée de contact correspond à une vitesse spatiale horaire du liquide dans un système catalytique à lit fixe de moins de 15.